# EUROPÄISCHE PATENTSCHRIFT

(11) **EP 3 450 782 B1**
(45) Veröffentlichungstag und Bekanntmachung des Hinweises auf die Patenterteilung: **06.11.2019**
(21) Anmeldenummer: 17189437.1
(22) Anmeldetag: 05.09.2017
(51) Int. Cl.: F16C 32/04

(54) **AKTIVES RADIALES MAGNETLAGER MIT JOCHWICKLUNG**
ACTIVE RADIAL MAGNETIC BEARING WITH A YOKE COIL
SUPPORT MAGNÉTIQUE RADIAL ACTIF POURVU DE BOBINAGE DE JOUG

(43) Veröffentlichungstag der Anmeldung: 06.03.2019
(73) Patentinhaber: Lakeview Innovation Ltd., 6374 Buochs (CH)
(72) Erfinder: Kreher, Johannes, 6078 Lungern (CH)
(74) Vertreter: Grünecker Patent- und Rechtsanwälte PartG mbB

(56) Entgegenhaltungen:
- WO-A1-90/14525
- DE-A1- 2 338 307
- JP-A- S63 242 153
- JP-U- S63 106 916

## Beschreibung

Die vorliegende Erfindung betrifft ein radiales Magnetlager nach dem Oberbegriff des unabhängigen Anspruchs 1.

Ein gattungsgemäßes radiales Magnetlager weist eine Achse, einen Stator sowie einen Rotor auf. Stator und Rotor sind zueinander und zu der Achse des Magnetlagers koaxial angeordnet. Der Stator weist zumindest zwei axial voneinander beabstandete Statoranordnungen auf. Jede der Statoranordnungen weist einen weichmagnetischen Kern auf, wobei zumindest eine der Statoranordnungen einen besagten weichmagnetischen Kern mit mehreren in Umfangsrichtung verteilt angeordneten, radial abstehenden Zähnen, und mehrere ebenfalls in Umfangsrichtung verteilt angeordnete Spulen aufweist. Jeweils zwei in Umfangsrichtung aufeinanderfolgende Zähne des weichmagnetischen Kerns sind über einen Verbindungsabschnitt des Kerns miteinander verbunden. Das Magnetlager weist ferner eine axial zwischen den beiden weichmagnetischen Kernen angeordnete Permanentmagnetanordnung auf.

Bei den aus dem Stand der Technik bekannten radialen Magnetlagern der gattungsgemäßen Art besteht die Permanentmagnetanordnung üblicherweise aus einem einzelnen Magnetring, der ebenfalls Teil des Stators ist und in axialer Richtung magnetisiert ist. Dieser Magnetring sitzt direkt zwischen den beiden Kernen. Die Kerne weisen üblicherweise einen äußeren Ring auf, von dem die Zähne radial nach innen abstehen. Bei den Verbindungsabschnitten handelt es sich somit um einfache Ringsegmente. Bei den aus dem Stand der Technik bekannten radialen Magnetlagern sind die Zähne mit den Spulen bewickelt. Dabei sind verschiedene Zahn-, Phasen, und Wicklungstopologien möglich.

Ein radiales Magnetlager nach dem Oberbegriff des unabhängigen Anspruchs 1 ist beispielsweise aus WO 9014525 A1 bekannt.

Der Permanentmagnetring zwischen den beiden Kernen erzeugt einen magnetischen Fluss, der über den Rotor geschlossen wird. Im unbestromten Zustand verteilt sich der magnetische Fluss gleichmäßig über den Umfang, sodass in radialer Richtung keine Nettokraft entsteht. Durch die Bestromung der Spulen wird ein magnetisches Feld erzeugt, das den magnetischen Fluss des Permanentmagneten beeinflusst. Der magnetische Fluss wird so gelenkt, dass die Flussdichte im Luftspalt zwischen Rotor und Stator nicht mehr gleich verteilt ist. Dadurch entsteht eine auf den Rotor wirkende Nettokraft in radialer Richtung. Wird bei dem aus dem Stand der Technik bekannten Konzept eine Einzelzahnwicklung verwendet, dann kompensieren sich die Ströme der einzelnen Spulen teilweise, sodass das Konzept wenig effizient, und die Kraftdichte relativ gering ist. Es ist aus dem Stand der Technik auch bekannt, eine Durchmesserwicklung zu verwenden. Diese weist jedoch einen sehr großen Wicklungskopf auf, der nicht zur Kraftbildung beiträgt. Somit ist die Kraftdichte relativ gering.

Die vorliegende Erfindung hat sich daher zur Aufgabe gestellt, ein radiales Magnetlager der gattungsgemäßen Art derart weiterzubilden, dass die Kraftdichte erhöht wird.

Die Aufgabe wird gelöst durch die Merkmale des unabhängigen Anspruchs 1. Demnach liegt bei einem radialen Magnetlager nach dem Oberbegriff des unabhängigen Anspruchs 1 dann eine erfindungsgemäße Lösung der Aufgabe vor, wenn zumindest eine besagte Statoranordnung, welche mehrere in Umfangsrichtung verteilt angeordnete Spulen aufweist, und deren weichmagnetischer Kern mehrere in Umfangsrichtung verteilt angeordnete, radial abstehende Zähne aufweist, derart ausgeführt ist, dass jeweils einer der Verbindungsabschnitte mit jeweils einer der Spulen bewickelt ist.

Mit anderen Worten ausgedrückt, sind nicht die Zähne des Kerns sondern die sich im Wesentlichen in Umfangsrichtung zwischen den Zähnen erstreckenden Verbindungsabschnitte des Kerns mit den Spulen bewickelt. Jeder Verbindungsabschnitt bildet ein Joch zwischen den jeweils angrenzenden Zähnen, weshalb die Spulen auch als Jochwicklung bezeichnet werden können.

Die erfindungsgemäße Lösung führt zu einer deutlich erhöhten Kraftdichte des radialen Magnetlagers. Bei gleicher Kupferverlustleistung und gleicher Kraft ist eine Steigerung der Kraftdichte um mehr als 50 % möglich.

Im Rahmen der vorliegenden Anmeldung sind räumliche Angaben wie "axial", "radial", "in Umfangsrichtung" usw., falls nicht anders angegeben, auf die Achse des Magnetlagers bezogen.

Vorzugsweise handelt es sich bei dem Stator um einen außenliegenden Stator, und bei dem Rotor um einen Innenläufer.

Vorteilhafte Ausführungsformen der vorliegenden Erfindung sind Gegenstand der Unteransprüche.

Gemäß einer bevorzugten Ausführungsform der vorliegenden Erfindung sind sämtliche Statoranordnungen derart ausgeführt, dass deren weichmagnetischer Kern mehrere, in Umfangsrichtung verteilt angeordnete, radial abstehenden Zähne aufweist, wobei jeweils zwei in Umfangsrichtung aufeinanderfolgende Zähne des weichmagnetischen Kerns über einen Verbindungsabschnitt des Kerns miteinander verbunden sind, und wobei jeweils einer der Verbindungsabschnitte mit jeweils einer Spule bewickelt ist. Dadurch kann eine besonders hohe Kraftdichte erreicht werden.

Gemäß einer weiteren besonders bevorzugten Ausführungsform der vorliegenden Erfindung ist die Permanentmagnetanordnung Teil des Stators und weist mehrere axial magnetisierte Einzelmagneten auf, wobei die Einzelmagneten derart angeordnet sind, dass die Einzelmagneten und die Zähne in axialer Richtung miteinander fluchten. Die Anzahl der Einzelmagneten entspricht daher der Anzahl der Zähne pro Kern. Vorzugsweise sind die Einzelmagneten zwischen den Zähnen zweier Kerne angeordnet, wobei die beiden Kerne unterschiedlichen Statoranordnungen angehören. Jeder Permanentmagnet befindet sich somit axial zwischen einem Zahn eines ersten Kerns und einem Zahn eines zweiten Kerns. Diese Ausführungsform ist besonders einfach herzustellen und auch kostengünstig in der Herstellung, da einzelne Permanentmagneten einfacher herzustellen und zu beschaffen sind als Magnetringe. Besonders vorteilhaft ist die Verwendung von blockförmigen Magneten, da diese besonders einfach hergestellt werden können. Weiter vorzugsweise weisen die Permanentmagneten und die Zähne der Kerne bezogen auf die Achse des Magnetlagers im wesentlichen denselben Querschnitt auf. Befindet sich der Rotor innen, ist am Innenumfang des Stators eine leichte Abweichung zwischen der Geometrie eines Zahns und der Geometrie des jeweils zugehörigen Permanentmagneten durchaus sinnvoll, da sich die Zähne ungeachtet des erforderlichen Luftspalts vorteilhafter Weise an den Außenumfang des Rotors anschmiegen, wohingegen die Permanentmagneten aus Kostengründen eine einfache Blockgeometrie mit jeweils planen Seitenflächen aufweisen.

Anstatt mehrere einzelne Permanentmagneten zu verwenden, kann in einer alternativen Ausführungsform selbstverständlich auch ein einzelner Ringmagnet verwendet werden.

Gemäß einer weiteren besonders bevorzugten Ausführungsform der vorliegenden Erfindung weist der Rotor einen äußeren hohlzylindrischen Teil und einen inneren Teil auf, wobei der äußere hohlzylindrische Teil als weichmagnetisches Blechpakets ausgeführt ist, und wobei der innere Teil des Rotors als massiver weichmagnetischer Rückschluss ausgeführt ist. Der Rotor hat die Aufgabe, den radialen Fluss aufzunehmen und den axialen Rückschluss zu bilden. Da unter Last am Außenumfang des Rotors mit Wirbelströmen zu rechnen ist und die Wirbelströme möglichst unterbunden werden sollten, wäre es generell von Vorteil, den Rotor als weichmagnetisches Blechpaket auszuführen. Dies widerspricht jedoch der Anforderung an den Rotor, den magnetischen Fluss axial zu leiten. Die Ausführungsform mit einem hohlzylindrischem äußeren Teil in Form eines weichmagnetischen Blechpakets und einem innerem massiven weichmagnetischen Rückschluss wird beiden Anforderungen gerecht. Der massive weichmagnetische Rückschluss des Rotors befindet sich vorzugsweise im Bereich beginnender Sättigung. Dadurch ist die Änderung der magnetischen Flussdichte im massiven Teil des Rotors selbst unter Last nur gering, wodurch die Wirbelstromverluste in diesem Bereich reduziert werden.

Gemäß einer alternativen Ausführungsform der vorliegenden Erfindung ist die Permanentmagnetanordnung Teil des Rotors. Dabei weist die Permanentmagnetanordnung vorzugsweise einen zusammenhängenden axial magnetisierten Permanentmagneten auf, welcher Bestandteil der Rotorbaugruppe ist. Hierbei kann es sich weiter vorzugsweise um einen Zylinder oder um eine Scheibe handeln. Unter einem zusammenhängenden Permanentmagneten wird im Rahmen der vorliegenden Anmeldung sowohl ein einziger als auch ein aus mehreren Teilen zusammengesetzter Permanentmagnet verstanden, wobei die erste Alternative bevorzugt ist. Weiter vorzugsweise weist der Permanentmagnet bei dieser Ausführungsform eine Durchgangsöffnung auf, durch die sich eine Welle des Rotors bzw. der Rotorbaugruppe erstreckt, sodass der Permanentmagnet ringförmig ausgeführt ist. Wenn die Permanentmagnetanordnung Teil des Rotors ist, muss sich die Permanentmagnetanordnung in einer axialen Projektion nicht zwangsweise mit den weichmagnetischen Kernen der Statoranordnungen überdecken, um im Sinne der vorliegenden Anmeldung axial zwischen den weichmagnetischen Kernen angeordnet zu sein. Ausschlaggebend ist lediglich die jeweils mittlere axiale Position der genannten Komponenten. Der Außendurchmesser der rotorseitigen Permanentmagnetanordnung kann beispielsweise kleiner sein als ein Innendurchmesser der statorseitigen Kerne. Statorseitig kann in diesem Fall eine weichmagnetische Flussführung zwischen den Kernen der Statoranordnungen vorgesehen sein. Die weichmagnetische Flussführung kann einen oder mehrere weichmagnetische Blöcke aufweisen, die zwischen den Kernen angeordnet sind. Der weichmagnetische Block kann beispielsweise aus radial oder tangential angeordneten weichmagnetischen Blechen oder aus einem weichmagnetischen Kompositmaterial (SMC) bestehen. Ein Permanentmagnet der Rotorbaugruppe kann auch zusätzlich zu einer Permanentmagnetanordnung des Stators vorgesehen sein.

Jeder der weichmagnetischen Kerne verfügt vorzugsweise über die gleiche Anzahl an Zähnen. Es ist eine beliebige Anzahl an Zähnen möglich. Vorzugsweise weist jeder weichmagnetische Kern jedoch jeweils vier oder sechs Zähne auf.

Gemäß einer weiteren Ausführungsform der vorliegenden Erfindung sind mehr als zwei Statoranordnungen vorgesehen, wobei zwischen zwei axial aufeinanderfolgenden Statoranordnungen jeweils eine Permanentmagnetanordnung angeordnet ist. Bei dieser Ausführungsform ist es auch möglich, dass eine der Statoranordnungen keine Spulen aufweist. Das Magnetlager kann beispielsweise drei Statoranordnungen aufweisen, wobei vorzugsweise entweder nur die mittlere der drei Statoranordnungen oder nur die äußeren beiden der drei Statoranordnungen Spulen aufweisen. Der weichmagnetische Kern der unbewickelten Statoranordnung kann entweder ebenfalls gezahnt oder aber ringförmig ausgeführt sein.

Auch ist es denkbar, dass das erfindungsgemäße Magnetlager an beiden axialen Enden jeweils mit einer Permanentmagnetanordnung abschließt. Der magnetische Fluss wird in diesem Fall an den beiden axialen Enden über Luft oder über angrenzende Bauteile geschlossen.

Gemäß einer weiteren bevorzugten Ausführungsform der vorliegenden Erfindung sind die Verbindungsabschnitte der Kerne der Statoranordnungen jeweils als Ringssegment ausgeführt. Die Ringsegmente können grundsätzlich einen beliebigen Krümmungsradius aufweisen. Bevorzugt ist der Krümmungsradius grösser als der radiale Abstand des Ringsegments zur Achse des Magnetlagers. Alternativ können die Verbindungsabschnitte auch derart ausgeführt werden, dass sie im Wesentlichen gerade und, bezogen auf die Achse, in tangentialer Richtung verlaufen.

Gemäß einer weiteren besonders bevorzugten Ausführungsform der vorliegenden Erfindung stehen die Zähne sowohl radial nach außen als auch radial nach innen ab. Die Verbindungsabschnitte bilden somit zusammen mit mittleren Abschnitten der Zähne einen durchgehenden Ring, von dem die Zähne jeweils radial nach innen und radial nach außen abstehen. Bei geeigneten Größenverhältnissen können die zwischen den Zähnen bestehenden Nuten auch am Außen-bzw. Innenumfang des Kerns geschlossen sein.

Gemäß einer weiteren besonders bevorzugten Ausführungsform der vorliegenden Erfindung ist bzw. sind der Permanentmagnet oder die Permanentmagneten als Seltenerdmagnet ausgeführt. Dadurch ergibt sich eine besonders leichte und kompakte Bauform.

Gemäß einer weiteren Ausführungsform der vorliegenden Erfindung besteht der weichmagnetische Kern aus einem Blechpaket. Der weichmagnetische Kern kann jedoch auch aus einem weichmagnetischen Kompositmaterial bestehen.

Eine kostengünstige Herstellung ergibt sich insbesondere dann, wenn die Spulen mittels einer Toroidwickelmaschine auf die Verbindungsabschnitte aufgewickelt werden.

Ausführungsbeispiele der vorliegenden Erfindung werden im Folgenden anhand von Zeichnungen näher erläutert.

Es zeigen:
- Figur 1:: eine Schrägansicht eines radialen Magnetlagers gemäß einem ersten Ausführungsbeispiel,
- Figur 2:: einen Längsschnitt des radialen Magnetlagers aus Figur 1 entlang der in Figur 3 eingezeichneten Schnittlinie II,
- Figur 3:: einen Querschnitt durch das radiale Magnetlager aus den Figuren 1 und 2 entlang der in Figur 2 eingezeichneten Schnittlinie III,
- Figur 4:: einen Längsschnitt durch ein radiales Magnetlager gemäß einem zweiten Ausführungsbeispiel,
- Figur 5:: einen Längsschnitt durch ein radiales Magnetlager gemäß einem dritten Ausführungsbeispiel,
- Figur 6:: einen Längsschnitt durch ein radiales Magnetlager gemäß einem vierten Ausführungsbeispiel, und
- Figur 7:: einen Längsschnitt durch ein radiales Magnetlager gemäß einem fünften Ausführungsbeispiel.

Für die folgenden Ausführungen gilt, dass gleiche Teile durch gleiche Bezugszeichen bezeichnet werden. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

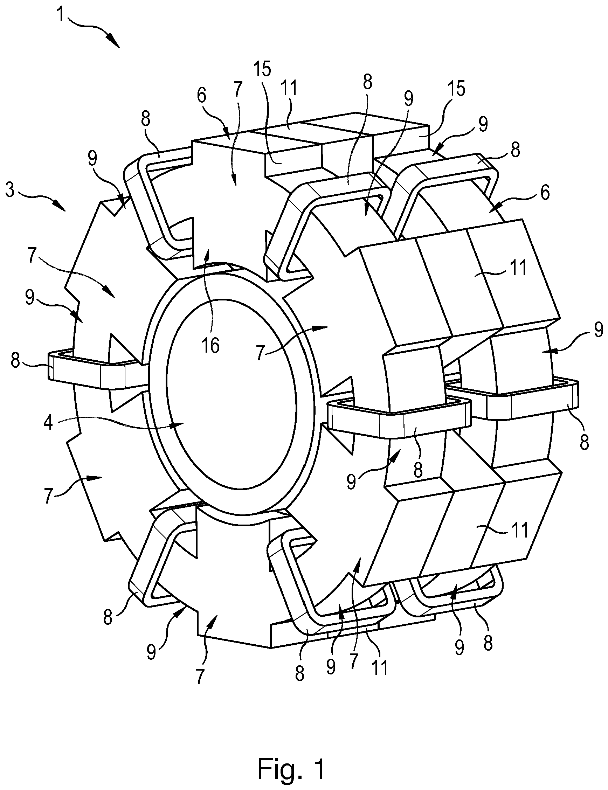

Die Figuren 1 bis 3 zeigen ein erstes Ausführungsbeispiel eines erfindungsgemäßen radialen Magnetlagers 1. Das Magnetlager weist einen äußeren Stator 3 und einen inneren Rotor 4 auf. Stator 3 und Rotor 4 sind koaxial zueinander angeordnet. Sie sind daher beide im wesentlichen rotationssymmetrisch zu einer gemeinsamen Achse 2 des Magnetlagers ausgeführt.

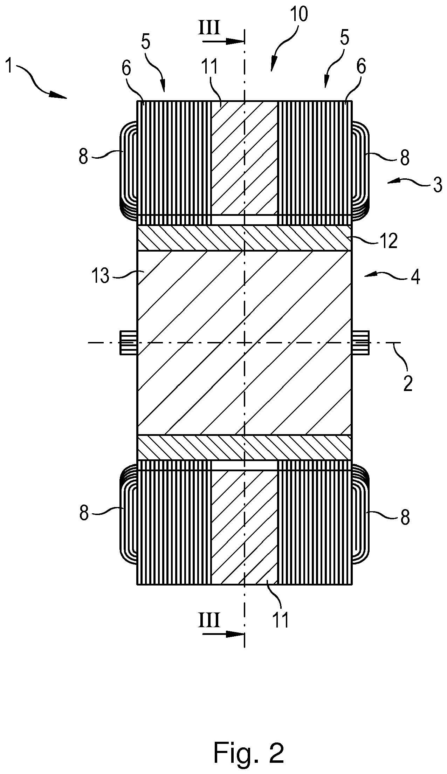

Wie insbesondere in Figur 2 gezeigt ist, weist der Stator 3 zwei axial voneinander beanstandete Statoranordnungen 5 auf. Jede der beiden Statoranordnungen 5 umfasst einen weichmagnetischen Kern 6. Die weichmagnetischen Kerne sind bei dem gezeigten Ausführungsbeispiel jeweils als weichmagnetisches Blechpaket ausgeführt, können aber auch aus einem weichmagnetischen Kompositmaterial bestehen. In Figur 1 ist zu erkennen, dass jedes der beiden weichmagnetischen Blechpakete 6 mehrere in Umfangsrichtung verteilt angeordnete Zähne 7 aufweist. Bei dem gezeigten Ausführungsbeispiel sind insgesamt sechs Zähne pro Blechpaket vorgesehen. Die Zähne 7 weisen zueinander in Umfangsrichtung einen einheitlichen Abstand auf und sind über jochartige Verbindungsabschnitte 9 miteinander verbunden. Die Verbindungsabschnitte 9 sind als Ringssegmente ausgeführt und bilden zusammen mit mittleren Teilen der Zähne einen geschlossenen Kreisring, von dem pro Zahn jeweils ein äußerer Teil 15 des Zahns radial nach außen absteht, und ein innerer Teil 16 des Zahns radial nach innen absteht.

Jede der beiden Statoranordnungen weist ferner jeweils insgesamt sechs Spulen 8 auf. Die Spulen 8 bilden zusammen eine Statorwicklung, die entsprechend bestromt werden kann, um eine auf den Rotor 4 des Magnetlagers wirkende Nettokraft in radialer Richtung zu erzeugen. Die Spulen 8 sind in den Darstellungen nur schematisch dargestellt und können den Zwischenraum zwischen den radial abstehenden Teilen der Zähne vollständig ausfüllen. Sie werden vorzugsweise mittels einer Toroidwickelmaschine auf die Verbindungsabschnitte aufgewickelt. Die Achse jeder Spule verläuft, bezogen auf die Achse des Magnetlagers, in Umfangsrichtung beziehungsweise tangential.

Axial zwischen den beiden weichmagnetischen Blechpaketen 6 ist eine Permanentmagnetanordnung 10 des Stators 3 angeordnet. Die Permanentmagnetanordnung 10 besteht aus insgesamt sechs einzelnen, blockförmigen Permanentmagneten 11, die bezogen auf die Achse 2 des Magnetlagers in axialer Richtung magnetisiert sind. Die 6 Einzelmagneten sind derart zwischen den Zähnen 7 der weichmagnetischen Blechpakete 6 angeordnet, dass die Einzelmagneten 11 und die Zähne 7 in axialer Richtung miteinander fluchten.

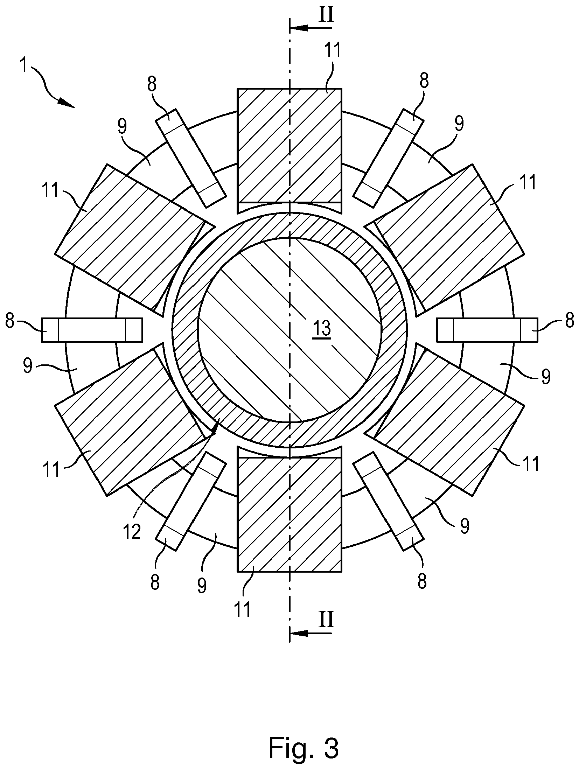

Die Figuren 2 und 3 zeigen, dass der Rotor 4 des erfindungsgemäßen Magnetlagers 1 aus einem äußeren hohlzylindrischen Teil 12 und einem inneren Teil 13 besteht. Der äußere hohlzylindrische Teil 12 ist als weichmagnetisches Blechpaket ausgeführt, um Wirbelströme im äußeren Bereich des Rotors zu vermeiden. Der innere Teil 13 des Rotors ist als massiver weichmagnetischer Rückschluss ausgeführt, um den im Stator generierten magnetischen Fluss axial zu leiten.

In der Querschnittsdarstellung gemäß Figur 3 ist zu erkennen, dass die Zähne 7 der weichmagnetischen Blechpakete und die zwischen den beiden Blechpaketen angeordneten Einzelmagneten 11 im wesentlichen denselben Querschnitt aufweisen. Um die Beschaffungskosten für die Einzelmagneten niedrig zu halten, sind diese als einfache, quaderförmige Blöcke ausgebildet. Die Zähne 7 der Blechpakete 6 unterscheiden sich von den Einzelmagneten in ihrer Form lediglich dadurch, dass sie sich an ihrem zur Achse weisenden Ende an den Außenumfang des Rotors anschmiegen. Selbstverständlich ist ungeachtet dessen zwischen den Zähnen 7 und dem Außenumfang des Rotors ein gewisser Luftspalt vorhanden.

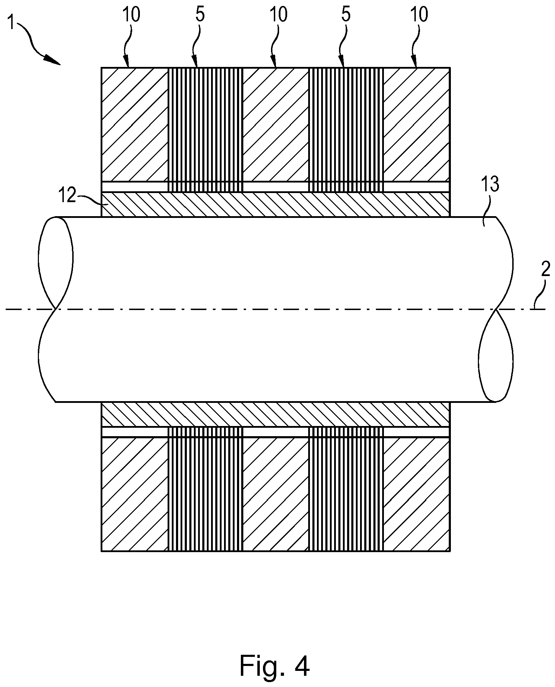

Figur 4 zeigt ein radiales Magnetlager 1 gemäß einem weiteren Ausführungsbeispiel der vorliegenden Erfindung. Die Darstellung zeigt einen Längsschnitt analog zu Figur 2. Im mittleren Bereich des Magnetlagers 1 ist der Aufbau grundsätzlich genauso wie bei dem Ausführungsbeispiel aus den Figuren 1 bis 3. Der Unterschied zu dem Ausführungsbeispiel gemäß Figuren 1 bis 3 besteht darin, dass zwei zusätzliche Permanentmagnetanordnungen 10 vorgesehen sind. Die beiden zusätzlichen Permanentmagnetanordnungen 10 befinden sich an den beiden axialen Enden des Magnetlagers. Das Magnetlager schließt somit an den beiden axialen Enden jeweils mit einer Permanentmagnetanordnung ab. Der Rotor des Magnetlagers muss entsprechend länger ausgeführt werden. Der magnetische Fluss wird an den beiden axialen Enden des Magnetlagers über Luft geschlossen. Das in Figur 4 gezeigten Ausführungsbeispiel steht exemplarisch für eine Reihe von denkbaren Ausführungsbeispielen mit einer beliebigen Anzahl von Statoranordnungen. Denn an die beiden Permanentmagnetanordnungen 10 können wiederum weitere Statoranordnungen anschließen.

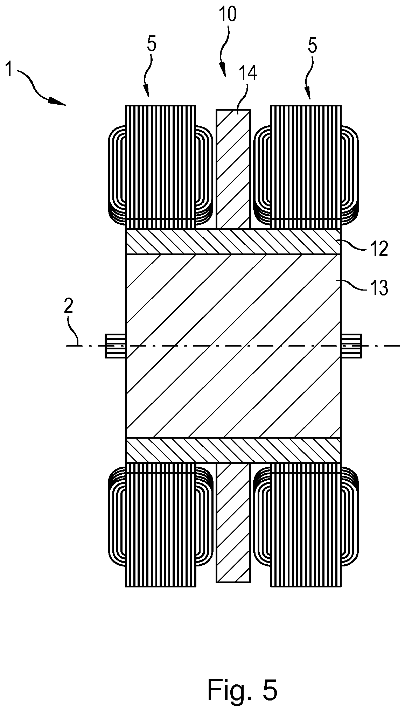

Figur 5 zeigt ein weiteres Ausführungsbeispiel eines erfindungsgemäßen radialen Magnetlagers 1. Die Darstellung zeigt wieder einen Längsschnitt analog zu den Figuren 2 und 4. Im Unterschied zu dem Ausführungsbeispiel aus den Figuren 1 bis 3 ist die zwischen den beiden Statoranordnungen 5 angeordnete Permanentmagnetanordnung 10 nicht Teil des Stators sondern Teil des Rotors. Sie besteht aus einem einzigen Permanentmagnetring 14, welcher fest mit den übrigen Bauteilen des Rotors verbunden ist. Der Permanentmagnetenring 14 weist eine Durchgangsbohrung auf, durch die sich äußerer und innerer Teil 12, 13 der Rotorwelle erstrecken.

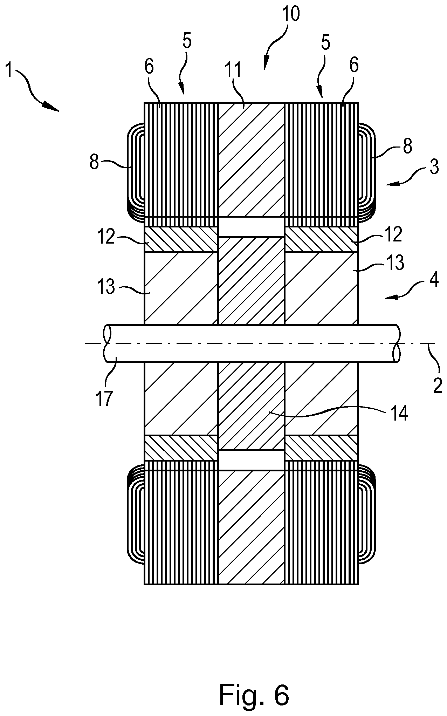

Figur 6 zeigt ein weiteres Ausführungsbeispiel eines erfindungsgemäßen radialen Magnetlagers 1. Bei diesem Ausführungsbeispiel ist der Stator 3 genauso aufgebaut wie bei dem Ausführungsbeispiel aus den Figuren 1 bis 3. Der innere Teil 13 und der äußere hohlzylindrische Teil 12 des Rotors 4 sind in der Mitte jedoch unterbrochen durch einen Permanentmagnetring 14, der ähnlich zu dem Ausführungsbeispiel aus Figur 5 Bestandteil des Rotors ist. Der Permanentmagnetring 14 ist ebenfalls axial magnetisiert und befindet sich axial zwischen den beiden Blechpaketen 6 des Stators, wenngleich der Außendurchmesser des Permanentmagnetrings kleiner ist als der Innendurchmesser der hohlzylindrischen Bleckpakete 6. Der Außendurchmesser des Permanentmagnetrings 14 ist maximal gleich dem Außendurchmesser der weichmagnetischen Rotorteile. Radial außerhalb des Permanentmagnetrings 14 sind die statorseitigen Einzelmagneten 11 angeordnet. Das Ausführungsbeispiel gemäß Figur 6 unterscheidet sich von dem Ausführungsbeispiel aus den Figuren 1 bis 3 zusätzlich dadurch, dass der Rotor eine zentrale Welle 17 aufweist, die sich durch eine entsprechende Bohrung des inneren Teils 13 des Rotors und des Permanentmagnetrings 14 hindurch erstreckt.

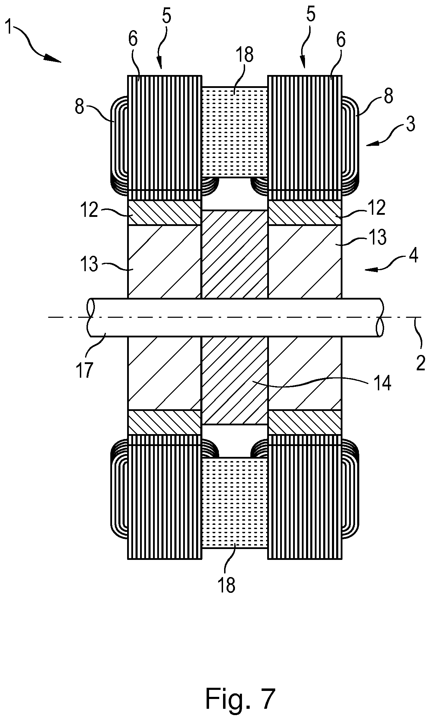

Figur 7 zeigt ein weiteres Ausführungsbeispiel eines erfindungsgemäßen radialen Magnetlagers 1. Von dem Ausführungsbeispiel aus Figur 6 unterscheidet sich dieses Ausführungsbeispiel dadurch, dass statorseitig keine Einzelmagneten vorgesehen sind. Es gibt daher auch keine statorseitige Permanentmagnetanordnung. Die Permanentmagnetanordnung besteht hier nur aus dem rotorseitigen Permanentmagnetring 14. Die Einzelmagneten 11 sind bei diesem Ausführungsbeispiel ersetzt durch weichmagnetische Blöcke 18, die aus aufeinandergeschichteten, radial oder tangential verlaufenden weichmagnetischen Blechen oder aus einem weichmagnetischen Kompositmaterial bestehen. Die weichmagnetischen Blöcke 18 können stoffschlüssig mit den weichmagnetischen Kernen 6 verbunden sein. Es ist auch möglich, die weichmagnetischen Blöcke 18 als Teil zumindest eines der weichmagnetischen Kerne 6 auszuführen.

## Patentansprüche

1. Radiales Magnetlager (1) mit einer Achse (2), einem Stator (3) und einem Rotor (4),
wobei der Stator zumindest zwei axial voneinander beabstandete Statoranordnungen (5) aufweist, wobei jede der Statoranordnungen einen weichmagnetischen Kern (6) aufweist,
wobei zumindest eine der Statoranordnungen (5) einen besagten weichmagnetischen Kern (6) mit mehreren in Umfangsrichtung verteilt angeordneten, radial abstehenden Zähnen (7), und mehrere ebenfalls in Umfangsrichtung verteilt angeordnete Spulen (8) aufweist, und wobei jeweils zwei in Umfangsrichtung aufeinanderfolgende Zähne (7) des weichmagnetischen Kerns (6) über einen Verbindungsabschnitt (9) des Kerns (6) miteinander verbunden sind,
wobei das Magnetlager (1) ferner eine axial zwischen den beiden weichmagnetischen Kernen (6) angeordnete Permanentmagnetanordnung (10) aufweist,
**dadurch gekennzeichnet, dass** zumindest eine besagte Statoranordnung (5), welche mehrere in Umfangsrichtung verteilt angeordnete Spulen (8) aufweist, und deren weichmagnetischer Kern (6) mehrere in Umfangsrichtung verteilt angeordnete, radial abstehende Zähne aufweist, derart ausgeführt ist, dass jeweils einer der Verbindungsabschnitte (9) mit jeweils einer der Spulen (8) bewickelt ist.

2. Radiales Magnetlager (1) nach Anspruch 1, **dadurch gekennzeichnet, dass** sämtliche Statoranordnungen (5) derart ausgeführt sind, dass deren weichmagnetischer Kern (6) mehrere, in Umfangsrichtung verteilt angeordnete, radial abstehenden Zähne (7) aufweist, wobei jeweils zwei in Umfangsrichtung aufeinanderfolgende Zähne (7) des weichmagnetischen Kerns (6) über einen Verbindungsabschnitt (9) des Kerns (6) miteinander verbunden sind, und wobei jeweils einer der Verbindungsabschnitte (9) mit jeweils einer Spule (8) bewickelt ist.

3. Radiales Magnetlager (1) nach Anspruch 1 oder 2, **dadurch gekennzeichnet, dass** die Permanentmagnetanordnung (10) Teil des Stators (3) ist und mehrere axial magnetisierte Einzelmagneten (11) aufweist, wobei die Einzelmagneten derart angeordnet sind, dass die Einzelmagneten (11) und die Zähne (7) in axialer Richtung miteinander fluchten.

4. Radiales Magnetlager (1) nach Anspruch 3, **dadurch gekennzeichnet, dass** die Einzelmagneten (11) blockförmig ausgeführt sind.

5. Radiales Magnetlager (1) nach einem der Ansprüche 1 bis 4, **dadurch gekennzeichnet, dass** der Rotor (4) einen äußeren hohlzylindrischen Teil (12) und einen inneren Teil (13) aufweist, wobei der äußere hohlzylindrische Teil (12) als weichmagnetisches Blechpaket ausgeführt ist, und wobei der innere Teil (13) des Rotors als massiver weichmagnetischer Rückschluss ausgeführt ist.

6. Radiales Magnetlager (1) nach einem der Ansprüche 1 bis 5, **dadurch gekennzeichnet, dass** die Permanentmagnetanordnung (10) Teil des Rotors (4) ist.

7. Radiales Magnetlager (1) nach Anspruch 6, **dadurch gekennzeichnet, dass** die Permanentmagnetanordnung (10) einen zusammenhängenden axial magnetisierten Permanentmagneten (14) aufweist.

8. Radiales Magnetlager (1) nach einem der Ansprüche 1 bis 7, **dadurch gekennzeichnet, dass** jeder der weichmagnetischen Kerne (6) jeweils vier oder sechs Zähne (7) aufweist.

9. Radiales Magnetlager (1) nach einem der Ansprüche 1 bis 8, **dadurch gekennzeichnet, dass** mehr als zwei Statoranordnungen (5) vorgesehen sind, wobei zwischen zwei axial aufeinanderfolgenden Statoranordnungen (5) jeweils eine Permanentmagnetanordnung (10) angeordnet ist.

10. Radiales Magnetlager (1) nach Anspruch 9, **dadurch gekennzeichnet, dass** das Magnetlager drei Statoranordnungen (5) aufweist, wobei entweder nur die mittlere der drei Statoranordnungen (5) oder nur die äußeren beiden der drei Statoranordnungen (5) Spulen (8) aufweisen.

11. Radiales Magnetlager (1) nach einem der Ansprüche 1 bis 10, **dadurch gekennzeichnet, dass** das Magnetlager (1) an den beiden axialen Enden jeweils mit einer Permanentmagnetanordnung (10) abschließt.

12. Radiales Magnetlager (1) nach einem der Ansprüche 1 bis 11, **dadurch gekennzeichnet, dass** die Verbindungsabschnitte (9) jeweils als Ringsegment ausgeführt sind.

13. Radiales Magnetlager (1) nach einem der Ansprüche 1 bis 11, **dadurch gekennzeichnet, dass** die Verbindungsabschnitte (9) jeweils gerade und in tangentialer Richtung verlaufen.

14. Radiales Magnetlager (1) nach einem der Ansprüche 1 bis 13, **dadurch gekennzeichnet, dass** die Zähne (7) sowohl radial nach außen als auch radial nach innen abstehen.

15. Radiales Magnetlager (1) nach einem der Ansprüche 1 bis 14, **dadurch gekennzeichnet, dass** der Permanentmagnet (14) oder die Permanentmagneten (11) als Seltenerdmagnet ausgeführt ist/sind.

16. Radiales Magnetlager (1) nach einem der Ansprüche 1 bis 15, **dadurch gekennzeichnet, dass** der weichmagnetische Kern (6) aus einem Blechpaket oder aus einem weichmagnetischen Kompositmaterial besteht.

## Claims

1. Radial magnetic bearing (1) with an axis (2), a stator (3) and a rotor (4),
where said stator comprises at least two stator assemblies (5) axially spaced from one another, where each of said stator assemblies comprises a magnetically soft core (6),
where at least one of said stator assemblies (5) comprises one said magnetically soft core (6) with several radially projecting teeth (7) arranged distributed in the circumferential direction, and several coils (8) likewise arranged distributed in the circumferential direction, and where two respective teeth (7) of said magnetically soft core (6) that are successive in the circumferential direction are connected to each other by way of a connecting section (9) of said core (6),
where said magnetic bearing (1) further comprises a permanent magnet assembly (10) disposed axially between said two magnetically soft cores (6),
**characterized in that** at least one said stator arrangement (5), which comprises several coils (8) arranged distributed in the circumferential direction and the magnetically soft core (6) of which comprises several radially projecting teeth arranged distributed in the circumferential direction, is configured such that one of said respective connecting sections (9) is wound with one of said respective coils (8).

2. Radial magnetic bearing according to claim 1, **characterized in that** all of said stator assemblies (5) are embodied such that their magnetically soft core (6) comprises several radially projecting teeth (7) arranged distributed in the circumferential direction, where two respective teeth (7) of said magnetically soft core (6) that are successive in the circumferential direction are connected to each other by way of a connecting section (9) of said core (6), and where one respective connecting section (9) is wound with one respective coil (8).

3. Radial magnetic bearing (1) according to claim 1 or 2, **characterized in that** said permanent magnet assembly (10) is part of said stator (3) and comprises several axially magnetized single magnets (11), where said single magnets are arranged such that said single magnets (11) and said teeth (7) are aligned with each other in the axial direction.

4. Radial magnetic bearing (1) according to claim 3, **characterized in that** said single magnets (11) are configured to be block-shaped.

5. Radial magnetic bearing (1) according to one of the claims 1 to 4, **characterized in that** said rotor (4) comprises an outer hollow cylindrical part (12) and an inner part (13), where said outer hollow cylindrical part (12) is embodied as a magnetically soft laminated sheet package, and where said inner part (13) of said rotor is embodied as a solid magnetically soft circuit yoke.

6. Radial magnetic bearing (1) according to one of the claims 1 to 5, **characterized in that** said permanent magnet assembly (10) is part of said rotor (4).

7. Radial magnetic bearing (1) according to claim 6, **characterized in that** said permanent magnet assembly (10) comprises a continuous axially magnetized permanent magnet (14).

8. Radial magnetic bearing (1) according to one of the claims 1 to 7, **characterized in that** each of said magnetically soft cores (6) comprises four or six teeth (7) each.

9. Radial magnetic bearing (1) according to one of the claims 1 to 8, **characterized in that** more than two stator assemblies (5) are provided, where a permanent magnet assembly (10) is respectively arranged between two axially successive stator assemblies (5).

10. Radial magnetic bearing (1) according to claim 9, **characterized in that** said magnetic bearing comprises three stator assemblies (5), where either only the center one of said three stator assemblies (5) or only the outer two of said three stator assemblies (5) comprise coils (8).

11. Radial magnetic bearing (1) according to one of the claims 1 to 10, **characterized in that** said magnetic bearing (1) at the two respective axial ends terminates with a permanent magnet assembly (10).

12. Radial magnetic bearing (1) according to one of the claims 1 to 11, **characterized in that** said connecting sections (9) are each configured as a ring segment.

13. Radial magnetic bearing (1) according to one of the claims 1 to 11, **characterized in that** said connecting sections (9) extend rectilinear and in the tangential direction.

14. Radial magnetic bearing (1) according to one of the claims 1 to 13, **characterized in that** said teeth (7) project both radially outwardly as well as radially inwardly.

15. Radial magnetic bearing (1) according to one of the claims 1 to 14, **characterized in that** said permanent magnet (14) or said permanent magnets (11) is/are configured as a rare earth magnet.

16. Radial magnetic bearing (1) according to one of the claims 1 to 15, **characterized in that** said magnetically soft core (6) consists of a laminated sheet package or of magnetically soft composite material.

## Revendications

1. Palier magnétique radial (1) comportant un axe (2), un stator (3) et un rotor (4), palier magnétique radial
dans lequel le stator présente au moins deux agencements de stator (5) espacés axialement l'un de l'autre, chacun des agencements de stator présentant un noyau magnétique doux (6),
dans lequel au moins l'un des agencements de stator (5) comporte un noyau magnétique doux (6) précité avec plusieurs dents (7) en saillie radiale et agencées de manière répartie dans la direction périphérique, et plusieurs bobines (8) également agencées de manière répartie dans la direction périphérique, et dans lequel deux dents (7) du noyau magnétique doux (6), qui se succèdent respectivement dans la direction périphérique, sont reliées mutuellement par l'intermédiaire d'un tronçon de liaison (9) du noyau (6), et
dans lequel le palier magnétique (1) comprend, par ailleurs, un agencement d'aimant permanent (10) agencé axialement entre les deux noyaux magnétiques doux (6), **caractérisé en ce qu'**au moins un agencement de stator (5) précité, qui présente plusieurs bobines (8) agencées de manière répartie dans la direction périphérique, et dont le noyau magnétique doux (6) présente plusieurs dents en saillie radiale et agencées de manière répartie dans la direction périphérique, est réalisé de façon telle, que respectivement un des tronçons de liaison (9) soit bobiné avec respectivement l'une des bobines (8).

2. Palier magnétique radial (1) selon la revendication 1, **caractérisé en ce que** l'ensemble des agencements de stator (5) sont réalisés de manière telle, que leur noyau magnétique doux (6) présente plusieurs dents (7) en saillie radiale et agencées de manière répartie dans la direction périphérique, deux dents (7) du noyau magnétique doux (6), qui se succèdent respectivement dans la direction périphérique, étant reliées mutuellement par l'intermédiaire d'un tronçon de liaison (9) du noyau (6), et respectivement un des tronçons de liaison (9) étant bobiné avec respectivement une bobine (8).

3. Palier magnétique radial (1) selon la revendication 1 ou la revendication 2, **caractérisé en ce que** l'agencement d'aimant permanent (10) constitue une partie du stator (3) et présente plusieurs aimants individuels (11) magnétisés axialement, les aimants individuels étant agencés de manière telle, que les aimants individuels (11) et les dents (7) soient alignés mutuellement dans la direction axiale.

4. Palier magnétique radial (1) selon la revendication 3, **caractérisé en ce que** les aimants individuels (11) sont d'une configuration en forme de blocs.

5. Palier magnétique radial (1) selon l'une des revendications 1 à 4, **caractérisé en ce que** le rotor (4) comprend une partie extérieure (12) cylindrique creuse et une partie intérieure (13), la partie extérieure (12) cylindrique creuse étant réalisée sous la forme d'un empilement de tôles, magnétique doux, et la partie intérieure (13) du rotor étant réalisée sous la forme d'un retour magnétique doux, massif.

6. Palier magnétique radial (1) selon l'une des revendications 1 à 5, **caractérisé en ce que** l'agencement d'aimant permanent (10) fait partie du rotor (4).

7. Palier magnétique radial (1) selon la revendication 6, **caractérisé en ce que** l'agencement d'aimant permanent (10) comprend un aimant permanent (14) continu, magnétisé axialement.

8. Palier magnétique radial (1) selon l'une des revendications 1 à 7, **caractérisé en ce que** chacun des noyaux magnétiques doux (6) présente respectivement quatre ou six dents (7).

9. Palier magnétique radial (1) selon l'une des revendications 1 à 8, **caractérisé en ce que** sont prévus plus de deux agencements de stator (5), un agencement d'aimant permanent (10) étant respectivement prévu entre à chaque fois deux agencements de stator (5), qui se succèdent.

10. Palier magnétique radial (1) selon la revendication 9, **caractérisé en ce que** le palier magnétique comprend trois agencements de stator (5), seul celui du milieu des trois agencements de stator (5) ou seuls les deux extérieurs des trois agencements de stator (5) présentant des bobines (8).

11. Palier magnétique radial (1) selon l'une des revendications 1 à 10, **caractérisé en ce que** le palier magnétique (1) se termine aux deux extrémités, respectivement par un agencement d'aimant permanent (10) .

12. Palier magnétique radial (1) selon l'une des revendications 1 à 11, **caractérisé en ce que** les tronçons de liaison (9) sont réalisés respectivement en tant que segment annulaire.

13. Palier magnétique radial (1) selon l'une des revendications 1 à 11, **caractérisé en ce que** les tronçons de liaison (9) s'étendent respectivement de manière droite et dans la direction tangentielle.

14. Palier magnétique radial (1) selon l'une des revendications 1 à 13, **caractérisé en ce que** les dents (7) font saillie aussi bien radialement vers l'extérieur que radialement vers l'intérieur.

15. Palier magnétique radial (1) selon l'une des revendications 1 à 14, **caractérisé en ce que** l'aimant permanent (14) ou les aimants permanents (11) est/sont réalisé(s) en tant qu'aimant à terres rares.

16. Palier magnétique radial (1) selon l'une des revendications 1 à 15, **caractérisé en ce que** le noyau magnétique doux (6) est formé par un empilement de tôles ou par un matériau composite magnétique doux.
